# EUROPÄISCHE PATENTSCHRIFT

(11) **EP 2 197 795 B1**
(45) Veröffentlichungstag und Bekanntmachung des Hinweises auf die Patenterteilung: **02.01.2013**
(21) Anmeldenummer: 08838228.8
(22) Anmeldetag: 07.10.2008
(51) Int. Cl.: H01M 10/0562, H01M 6/18, C01D 15/00

(54) **LITHIUM-ARGYRODITE**
LITHIUM ARGYRODITE
COMPOSÉ ARGYRODITE-LITHIUM

(30) Priorität: 08.10.2007 DE 102007048289
(43) Veröffentlichungstag der Anmeldung: 23.06.2010
(73) Patentinhaber: Universität Siegen, 57068 Siegen (DE)
(72) Erfinder: DEISEROTH, Hans-Jörg, 57076 Siegen (DE); KONG, Shiao-Tong, 57072 Siegen (DE); SCHLOSSER, Marc, 93053 Regensburg (DE); REINER, Christof, 57074 Siegen (DE)
(74) Vertreter: Michalski Hüttermann & Partner
(86) Internationale Anmeldenummer: PCT/EP2008/063412
(87) Internationale Veröffentlichungsnummer: WO 2009/047254

(56) Entgegenhaltungen:
- TATSUMISAGO M ET AL: "New lithium ion conducting glass-ceramics prepared from mechanochemical Li2S-P2S5 glasses" SOLID STATE IONICS, NORTH HOLLAND PUB. COMPANY. AMSTERDAM, NL, Bd. 154-155, 2. Dezember 2002 (2002-12-02), Seiten 635-640, XP004396273 ISSN: 0167-2738
- S. T. KONG, C. REINER, H. J. DEISEROTH: "Synthesis and Characterization of Lithium Argyrodite, Li7PS6" ZEITSCHRIFT FÜR ANORGANISCHE UND ALLGEMEINE CHEMIE, Bd. 632, Nr. 12-13, 23. August 2006 (2006-08-23), Seite 2100, XP002514141 WILEY-VCH Verlag GmbH, Weinheim
- H. ECKERT, Z. ZHANG, J. H. KENNEDY: "Structural transformation of non-oxide chalcogenide glasses. The short-range order of Li2S-P2S5 glasses studied by quantitative 31-P, 6-Li, and 7-Li high-resolution solid-state NMR" CHEMISTRY OF MATERIALS, Bd. 2, Nr. 3, Mai 1990 (1990-05), Seiten 273-279, XP002514101 ACS Publications ISSN: 0022-3093 [gefunden am 1989-01-01] in der Anmeldung erwähnt
- R. H. P. FRANCISCO, T. TEPE, H. ECKERT: "A study of the system Li-P-Se" JOURNAL OF SOLID STATE CHEMISTRY, Bd. 107, Nr. 2, Dezember 1993 (1993-12), Seiten 452-459, XP002514127 Academic Press Inc.
- DEISEROTH H -J ET AL: "Li6PS5X: a class of crystalline Li-rich solids with an unusually high Li<+> mobility" ANGEWANDTE CHEMIE INTERNATIONAL EDITION WILEY-VCH VERLAG GMBH GERMANY, Bd. 47, Nr. 4, 11. Januar 2008 (2008-01-11), Seiten 755-758, XP002514083 ISSN: 1433-7851
- ÖZGÜL GÜN, CHRISTOF REINER, HANS-JÖRG DEISEROTH: "Quaternary Lithium Seleno Halide Argyrodites" ZEITSCHRIFT FÜR ANORGANISCHE UND ALLGEMEINE CHEMIE, Bd. 634, Nr. 11, 28. August 2008 (2008-08-28), Seite 2041, XP002514084 WILEY-VCH Verlag GmbH, Weinheim

## Beschreibung

Die vorliegende Erfindung betrifft eine neue Klasse Lithium-reicher Festkörperverbindungen, ein Verfahren zu ihrer Herstellung und ihre Verwendung als Festelektrolyte in primären und sekundären elektrochemischen Energiespeichern.

Argyrodite sind bereits seit langem bekannt und leiten sich vom Argyrodit Ag₈GeS₆ ab, das 1886 von C. Winkler erstmals beschrieben wurde und dessen Analyse zur Entdeckung des Germaniums führte. Die Argyrodit-Familie besteht aus mehr als 100 kristallinen Feststoffen und erstreckt sich beispielsweise auf solche Festkörperverbindungen, in denen das Silber durch Kupfer ersetzt ist, das Germanium durch Gallium oder Phospor und der Schwefel durch Selen. So beschreiben Nitsche, Kuhs, Krebs, Evain, Boucher , Pfitzner und Nilges unter anderem Verbindungen wie Cu₉GaS₆, Ag₇PSe₆ und Cu₈GaS₅Cl, deren Festkörper-Strukturen sich vom Argyrodit ableiten.

Li-Argyrodite waren bislang, mit Ausnahme der unzureichend charakterisierten Verbindung Li₇PS₆ (J.F. Brice, C.R. Seances in Acad. Sci. 1976, C283, 581) unbekannt. Jüngere Untersuchungen zum Beispiel von Eckert, Zhang und Kennedy in Chem. of Mat. 1990, 2, 273-279 beziehen sich aufthermomechanische Optimierungsversuche für das System Li₂S-P₂S₅. und zeigen insgesamt nicht phasenreine Proben. Allerdings werden bei manchen Proben für dieses System Anzeichen für eine hohe Lithium-Mobilität festgestellt.

Weitergehende Untersuchungen haben jedoch gezeigt, dass die Gewinnung phasenreiner Feststoffe im System Li₂S-P₂S₅ schwierig ist und unter anderem stark von den während der Herstellung eingesetzten Ausgangsstoffe und Tiegel-Materialien abhängig, so dass sich unterschiedliche Nebenprodukte je nach eingesetztem Material bilden.

Aufgabe der vorliegenden Erfindung ist es daher, eine neue Klasse Lithium-reicher Festkörperverbindungen bereit zu stellen, die neben einer hohen Lithiumionen-Mobilität eine phasenreine Herstellung ermöglicht.

Diese Aufgabe wird erfingdungsgemäß gelöst durch Lithium-Argyrodite der allgemeinen Formel (I):

Li⁺₍₁₂₋ₙ₋ₓ₎Bⁿ⁺X²⁻₆₋ₓY⁻ₓ (I)

wobei
Bⁿ⁺ ausgewählt ist aus der Gruppe P, As, Ge, Ga, Sb, Si, Sn, Al, In, Ti, V, Nb, und Ta,
X² ausgewählt ist aus der Gruppe S, Se, und Te,
Y ausgewählt ist aus der Gruppe Cl, Br, I, F, CN,OCN, SCN, N₃, und wobei 0 < x ≤ 2.

Vorteilhafterweise erlaubt die erfindungsgemäße Klasse neuer Lithium-reicher Argyrodite eine Herstellung phasenreiner Feststoffe. Daneben weisen die erfindungsgemäßen Verbindungen der neuen Klasse eine hohe Lithiumionen-Mobilität auf, die vorzugsweise bei einer Verwendung als Feststoff-Elektrolyt eingesetzt werden kann. Im Gegensatz zu bekannten Lithium-Elektrolyten können die erfindungsgemäßen Lithium-Argyrodite in einem weiten Temperaturbereich von -150°C bis 600°C eingesetzt werden. Damit kann die bisher zu beobachtende Temperaturempfindlichkeit von elektrochemischen Energiespeichern verringert werden.

Die Komponente Bⁿ⁺ kann bevorzugt ausgewählt sein aus der Gruppe P, As, Ge, Ga, Sb, Si, Sn, Al, In, Ti, V, Nb, und Ta. Besonders bevorzugt sind P, As, Sb und Ga, insbesondere im Hinblick auf die Verwendung als Elektrolyt-Bestandteil eines Lithium-Akkumulators.

Die Komponente X²⁻ kann ausgewählt sein aus der Gruppe S, Se und Te. Insbesondere Komponenten X²⁻ ausgewählt aus der Gruppe S und Se werden einer bevorzugten Ausgestaltung der Erfindung aufgrund ihrer leichteren Herstellung favorisiert.

Die Komponente Y⁻ kann bevorzugt ausgewählt sein aus der Gruppe Cl, Br, I, F, OCN, SCN, N₃, CN. Besonders bevorzugt sind Cl, Br und I, insbesondere im Hinblick auf die Verwendung als Elektrolyt-Bestandteil eines Lithium-Akkumulators.

Die erfindungsgemäßen Lithium-Argyrodite können bevorzugt Verbindungen der allgemeinen Formel (II) sein:

Li₆PS₅Z (II),

wobei der Bestandteil Z ein einwertiges Anion ausgewählt aus der Gruppe Cl, Br, I, F, CN, OCN, SCN, N₃ sein kann.

In einer weitren bevorzugten Ausführungsform der vorliegenden Erfindung kann die Komponente Z ausgewählt sein aus der Gruppe Cl, Br, I.

Diese Verbindungen zeigen insbesondere im Hinblick auf Z = I eine hohe spezifische Li⁺-Ionenleitfähigkeit, im genannten Fall Z = I von ca. 7 x 10⁻³ Scm⁻¹ bei Raumtemperatur. Auch NMR-Untersuchungen an diesen Verbindungen haben eine hohe spezifische Li⁺-Mobilität angezeigt.

Die Verbindungen der Formel (II) mit Z = Cl, Br oder I können vorteilhafterweise in Festkörpersynthese beispielsweise gemäß folgender Reaktionen dargestellt werden:

6 Li₂S + 2 P + ½ S₈ + I₂ → 2 Li₆PS₅I

5 Li₂S + 2 P + 5/8 S_{B} + 2 LiBr → 2 Li₆PS₅Br

5 Li₂S + 2 P + 5/8 S₈ + 2 LiCl → 2 Li₆PS₅Cl

In einer weiteren bevorzugten Ausführungsform der Erfindung können die Lithium-Argyrodite Verbindungen der allgemeinen Formel (III) sein:

Li₆B⁵⁺S₅₋ₐX²⁻ₐY⁻ (III)

wobei
B⁵⁺ ausgewählt ist aus der Gruppe P, As, und Sb,
X²⁻ ausgewählt ist aus der Gruppe Se und Te,
Y⁻ ausgewählt ist aus der Gruppe Cl, Br, I, F, CN, OCN, SCN, N₃, und wobei 0 ≤ a ≤ 2.

Die Erfindung betrifft darüber hinaus ein Verfahren zur Herstellung von Lithium-Argyroditen der allgemeinen Formel (I), gekennzeichnet durch die Schritte:
- Mischen der stöchiometrischen Mengen der Ausgangssubstanzen unter Inertgasatmosphäre,
- Pressen der erhaltenen Pulvermischung zu Presslingen, und
- Erhitzen der Presslinge auf Temperaturen zwischen 400°C und 700°C für eine Dauer von 3 Tagen bis 10 Tagen.

Vorteilhafterweise kann erfindungsgemäß ein Verfahren zur Verfügung gestellt werden, das neben einer guten Phasenreinheit der kristallinen Verbindungen eine einfache Prozessführung ermöglicht.

Das erfindungsgemäße Verfahren kann insbesondere bei einer Temperatur zwischen 500°C und 600°C, bevorzugt bei 550° durchgeführt werden.

In einer weiteren vorteilhaften Ausführungsform des Verfahrens kann eine Dauer von 4 Tagen bis 8 Tagen, bevorzugt eine Dauer von 7 Tagen, vorgesehen sein.

Ein erfindungsgemäßer Lithium-Argyrodit der allgemeinen Formel (I) kann bevorzugt als Lithiumionen-Elektrolyt für primäre und sekundäre elektrochemische Energiespeicher verwendet werden.

Die Erfindung wird mit den folgenden Beispielen weiter beschrieben, ohne darauf beschränkt zu sein.

### Beispiele:

### 1. Darstellung der erfindungsgemäßen Verbindung Li₆PS₅I

Zur Darstellung der Verbindung Li₆PS₅I wurden die Ausgangsstoffe I₂, S₈, Li₂S und P₂S₅ im stöchiometrischen Verhältnis unter Argon-Schutzgasatmosphäre abgewogen, in eine graphitierte Quarzampulle überführt und unter Vakuum abgeschmolzen. Die Probe wurde in einem Röhrenofen bei einer Temperatur von 550°C für 6 Tage getempert und anschließend langsam abgekühlt. Man erhielt phasenreine Kristalle der Verbindung Li₆PS₅I als weißen Feststoff.

### 2. Darstellung der erfindungsgemäßen Verbindung Li₆PS₅Br

Zur Darstellung der Verbindung Li₆PS₅Br wurden die Ausgangsstoffe LiBr, Li₂S und P₂S₅ im stöchiometrischen Verhältnis unter Argon-Schutzgasatmosphäre abgewogen, in eine graphitierte Quarzampulle überführt und unter Vakuum abgeschmolzen. Die Probe wurde in einem Röhrenofen bei einer Temperatur von 550°C für 6 Tage getempert und anschließend langsam abgekühlt. Man erhielt phasenreine Kristalle der Verbindung Li₆PS₅Br als weißen Feststoff.

### 3. Darstellung der erfindungsgemäßen Verbindung Li₆PS₅Cl

Zur Darstellung der Verbindung Li₆PS₅Cl wurden die Ausgangsstoffe LiCl, Li₂S und P₂S₅ im stöchiometrischen Verhältnis unter Argon-Schutzgasatmosphäre abgewogen, in eine graphitierte Quarzampulle überführt und unter Vakuum abgeschmolzen. Die Probe wurde in einem Röhrenofen bei einer Temperatur von 550°C für 6 Tage getempert und anschließend langsam abgekühlt. Man erhielt phasenreine Kristalle der Verbindung Li₆PS₅Cl als weißen Feststoff.

### 4. Darstellung der nicht-erfindungsgemäßen Verbindung Li₇PS₅Se

Zur Darstellung der Verbindung Li₇PS₅Se wurden die Ausgangsstoffe S₈, Li₂S und P Se im stöchiometrischen Verhältnis unter Argon-Schutzgasatmosphäre abgewogen, in eine graphitierte Quarzampulle überführt und unter Vakuum abgeschmolzen. Die Probe wurde in einem Röhrenofen bei einer Temperatur von 500°C - 550°C für 6 Tage getempert und anschließend langsam abgekühlt. Man erhielt phasenreine Kristalle der Verbindung Li₇PS₅Se als weißen Feststoff.

## Patentansprüche

1. Lithium-Argyrodite der allgemeinen Formel (I):
Li⁺₍₁₂₋ₙ₋ₓ)Bⁿ⁺X²⁻₆₋ₓY⁻ₓ (I)
wobei
Bⁿ⁺ ausgewählt ist aus der Gruppe P, As, Ge, Ga, Sb, Si, Sn, Al, In, Ti, V, Nb, und Ta,
X²⁻ ausgewählt ist aus der Gruppe S, Se, und Te,
Y⁻ ausgewählt ist aus der Gruppe Cl, Br, I, F, CN, OCN, SCN, N₃, und wobei 0 < x ≤ 2.

2. Lithium-Argyrodite nach Anspruch 1, **dadurch gekennzeichnet, dass** die Komponente Bⁿ⁺ ausgewählt ist aus der Gruppe P, As, Ge, Ga, Sb, Si, Sn, Al, In, Ti, V, Nb, und Ta, und bevorzugt aus der Gruppe P, As und Ga.

3. Lithium-Argyrodite nach Anspruch 1 oder 2, **dadurch gekennzeichnet, dass** die Komponente X² ausgewählt ist aus der Gruppe S, Se, und Te, und bevorzugt aus der Gruppe S und Se.

4. Lithium-Argyrodite nach einem der vorherigen Ansprüche, **dadurch gekennzeichnet, dass** die Komponente Y⁻ ausgewählt ist aus der Gruppe Cl, Br, I, F, CN, OCN, SCN, N₃, und bevorzugt aus der Gruppe Cl, Br und I.

5. Lithium-Argyrodite nach einem der vorherigen Ansprüche, **dadurch gekennzeichnet, dass** sie Verbindungen der allgemeinen Formel (II) sind:
Li₆PS₅Z (II)
wobei der Bestandteil Z ein einwertiges Anion ausgewählt aus der Gruppe Cl, Br, I, F, CN, OCN, SCN, N₃.

6. Lithium-Argyrodite nach Anspruch 5, **dadurch gekennzeichnet, dass** die Komponente Z ausgewählt ist aus der Gruppe Cl, Br und I.

7. Lithium-Argyrodite nach einem der vorherigen Ansprüche 1 bis 4, **dadurch gekennzeichnet, dass** sie Verbindungen der allgemeinen Formel (III) sind:
Li₆B⁵⁺S₅₋ₐX²⁻ₐY⁻ (III)
wobei
B⁵⁺ ausgewählt ist aus der Gruppe P, As, und Sb,
X²⁻ ausgewählt ist aus der Gruppe Se und Te,
Y⁻ ausgewählt ist aus der Gruppe Cl, Br, I, F, CN, OCN, SCN, N₃, und wobei 0 ≤ a ≤ 2.

8. Verfahren zur Herstellung eines Lithium-Argyrodit der allgemeinen Formel (I), **gekennzeichnet durch** die Schritte:
- Mischen der stöchiometrischen Mengen der Ausgangssubstanzen unter Inertgasatmosphäre,
- Pressen der erhaltenen Pulvermischung zu Presslingen, und
- Erhitzen der Presslinge auf Temperaturen zwischen 400°C und 700°C für eine Dauer von 3 Tagen bis 10 Tagen.

9. Verfahren zur Herstellung eines Lithium-Argyrodit nach Anspruch 8, **dadurch gekennzeichnet, dass** Temperaturen zwischen 500°C und 600°C, bevorzugt von 550°C eingestellt werden.

10. Verfahren zur Herstellung eines Lithium-Argyrodit nach Anspruch 8 oder 9, **dadurch gekennzeichnet, dass** das Erhitzen für eine Dauer von 4 Tagen bis 8 Tagen, bevorzugt für 7 Tage, durchgeführt wird.

11. Verwendung eines Lithium-Argyrodit nach einem der vorhergehenden Ansprüche 1 bis 7 als Lithiumionen-Elektrolyt in primären und sekundären elektrochemischen Energiespeichern.

## Claims

1. A lithium argyrodite of the general formula (I):
Li⁺₍₁₂₋ₙ₋ₓ)Bⁿ⁺X²⁻₆₋ₓY⁻ₓ (I)
in which
Bⁿ⁺ is selected from the group consisting of P, As, Ge, Ga, Sb, Si, Sn, Al, In, Ti, V, Nb and Ta,
X²⁻ is selected from the group consisting of S, Se and Te,
Y⁻ is selected from the group consisting of Cl, Br, I, F, CN, OCN, SCN, N₃,
and in which 0 < x ≤ 2.

2. The lithium argyrodite as claimed in claim 1, **characterized in that** the component Bⁿ⁺ is selected from the group consisting of P, As, Ge, Ga, Sb, Si, Sn, Al, In, Ti, V, Nb and Ta, and preferably from the group consisting of P, As and Ga.

3. The lithium argyrodite as claimed in claim 1 or 2, **characterized in that** the component X²⁻ is selected from the group consisting of S, Se and Te, and preferably from the group consisting of S and Se.

4. The lithium argyrodite as claimed in any of the preceding claims, **characterized in that** the component Y⁻ is selected from the group consisting of CI, Br, I, F, CN, OCN, SCN, N₃, and preferably from the group consisting of Cl, Br and I.

5. The lithium argyrodite as claimed in any of the preceding claims, **characterized in that** it is a compound of the general formula (II):
Li₆PS₅Z (II)
in which the constituent Z a monovalent anion selected from the group consisting of Cl, Br, I, F, CN, OCN, SCN, N₃.

6. The lithium argyrodite as claimed in claim 5, **characterized in that** the component Z is selected from the group consisting of Cl, Br and I.

7. The lithium argyrodite as claimed in any of the preceding claims 1 to 4, **characterized in that** it is a compound of the general formula (III):
Li₆B⁵⁺S₅₋ₐX²⁻ₐY⁻ (III)
in which
B⁵⁺ is selected from the group consisting of P, As and Sb,
X²⁻ is selected from the group consisting of Se and Te,
Y⁻ is selected from the group consisting of Cl, Br, I, F, CN, OCN, SCN, N₃,
and in which 0 ≤ a ≤ 2.

8. A process for the preparation of a lithium argyrodite of the general formula (I), **characterized by** the steps:
- mixing of the stoichiometric amounts of the starting substances under an inert gas atmosphere,
- pressing of the resulting powder mixture to give pellets, and
- heating of the pellets to temperatures from 400°C to 700°C for a duration of from 3 days to 10 days.

9. The process for the preparation of a lithium argyrodite as claimed in claim 8, **characterized in that** temperatures of from 500°C to 600°C, preferably of 550°C, are established.

10. The process for the preparation or a lithium argyrodite as claimed in claim 8 or 9, **characterized in that** the heating is carried out for a duration of from 4 days to 8 days, preferably for 7 days.

11. The use of a lithium argyrodite as claimed in any of the preceding claims 1 to 7 as a lithium ion electrolyte in primary and secondary electrochemical energy stores.

## Revendications

1. Lithium-argyrodites de formule générale (I) :
Li⁺₍₁₂₋ₙ₋ₓ₎Bⁿ⁺X²⁻₆₋ₓY⁻ₓ (I)
où
Bⁿ⁺ est choisi dans le groupe formé par P, As, Ge, Ga, Sb, Si, Sn, Al, In, Ti, V, Nb et Ta,
X²⁻ est choisi dans le groupe formé par S, Se et Te,
Y⁻ est choisi dans le groupe formé par Cl, Br, I, F, CN, OCN, SCN, N₃ et où 0 < x ≤ 2.

2. Lithium-argyrodites selon la revendication 1, **caractérisées en ce que** le composant Bⁿ⁺ est choisi dans le groupe formé par P, As, Ge, Ga, Sb, Si, Sn, Al, In, Ti, V, Nb et Ta, et de préférence dans le groupe formé par P, As et Ga.

3. Lithium-argyrodites selon la revendication 1 ou 2, **caractérisées en ce que** le composant X²⁻ est choisi dans le groupe formé par S, Se et Te, et de préférence dans le groupe formé par S et Se.

4. Lithium-argyrodites selon l'une quelconque des revendications précédentes, **caractérisées en ce que** le composant Y⁻ est choisi dans le groupe formé par Cl, Br, I, F, CN, OCN, SCN, N₃, et de préférence dans le groupe formé par Cl, Br et I.

5. Lithium-argyrodites selon l'une quelconque des revendications précédentes, **caractérisées en ce qu'**il s'agit de composés de formule générale (II) :
Li₆PS₅Z (II)
le constituant z étant un anion monovalent choisi dans le groupe formé par Cl, Br, I, F, CN, OCN, SCN, N₃.

6. Lithium-argyrodites selon la revendication 5, **caractérisées en ce que** le composant z est choisi dans le groupe formé par Cl, Br et I.

7. Lithium-argyrodites selon l'une quelconque des revendications 1 à 4, **caractérisées en ce qu'**il s'agit de composés de formule générale (III) :
Li₆B⁵⁺S₅₋ₐX²⁻ₐY⁻ (III)
où
B⁵⁺ est choisi dans le groupe formé par P, As et Sb,
X²⁻ est choisi dans le groupe formé par Se et Te,
Y⁻ est choisi dans le groupe formé par Cl, Br, I, F, CN, OCN, SCN, N₃ et où 0 ≤ a ≤ 2.

8. Procédé pour la préparation d'une lithium-argyrodite de formule générale (I), **caractérisé par** les étapes :
- mélange des quantités stoechiométriques des substances de départ sous une atmosphère de gaz inerte,
- pressage du mélange de poudres obtenu en pièces pressées et
- chauffage des pièces pressées à des températures entre 400°C et 700°C pendant une durée de 3 jours à 10 jours.

9. Procédé pour la préparation d'une lithium-argyrodite selon la revendication 8, **caractérisé en ce qu'**on règle des températures entre 500°C et 600°C, de préférence de 550°C.

10. Procédé pour la préparation d'une lithium-argyrodite selon la revendication 8 ou 9, **caractérisé en ce que** le chauffage est réalisé pendant une durée de 4 jours à 8 jours, de préférence pendant 7 jours.

11. Utilisation d'une lithium-argyrodite selon l'une quelconque des revendications précédentes 1 à 7 comme électrolyte de type lithium-ion dans des accumulateurs d'énergie électrochimiques primaires et secondaires.
